# EUROPÄISCHE PATENTSCHRIFT

(11) **EP 1 223 326 B1**
(45) Veröffentlichungstag und Bekanntmachung des Hinweises auf die Patenterteilung: **15.03.2006**
(21) Anmeldenummer: 01250446.0
(22) Anmeldetag: 19.12.2001
(51) Int. Cl.: F02D 41/06, F02D 41/14

(54) **Verfahren zur Steuerung einer eingespritzten Kraftstoffmenge während eines Startvorganges und zur Erkennung einer Kraftstoffqualität**
Method for controlling the injection amount during starting and for assessing fuel quality
Méthode de commande de la quantité de carburant injectée pendant le démarrage et de détermination de la qualité du carburant

(30) Priorität: 11.01.2001 DE 10101006; 11.01.2001 DE 10101007
(43) Veröffentlichungstag der Anmeldung: 17.07.2002
(73) Patentinhaber: Volkswagen Aktiengesellschaft, 38436 Wolfsburg (DE)
(72) Erfinder: Pott, Ekkehard Dr., 38518 Gifhorn (DE); Zillmer, Michael Dr., 38173 Sickte (DE); Sperling, Helmut, 38518 Gifhorn (DE)
(74) Vertreter: Schneider, Henry

(56) Entgegenhaltungen:
- US-A- 4 436 073
- US-A- 4 582 036
- US-A- 4 770 135
- US-A- 5 507 265

## Beschreibung

Die Erfindung betrifft ein Verfahren zur Steuerung einer zugeführten Kraftstoffmenge während eines Startvorganges einer Verbrennungskraftmaschine.

Ein Kaltstart oder ein Startvorgang bei niedrigen Motortemperaturen erfordert unter anderem besondere steuerungstechnische Maßnahmen im Bereich der Kraftstoffzufuhr. Der Startvorgang lässt sich dabei in einzelne Phasen gliedern. Zunächst wird die Verbrennungskraftmaschine durch einen Anlasser auf eine Mindestdrehzahl beschleunigt. Nach dem Erreichen der Mindestdrehzahl wird eine Kraftstoffmenge bereitgestellt, die im Vergleich zu Kraftstoffmengen unter höheren Betriebstemperaturen um einen Startmengen-Anhebungsfaktor deutlich angehoben ist. Diese Anhebung wird üblicherweise mit oder kurz nach dem Hochlauf der Verbrennungskraftmaschine auf eine Soll-Leerlaufdrehzahl zurückgenommen.

Ein Grundproblem beim Startvorgang sowohl bei fremdgezündeten, insbesondere direkteinspritzenden, Verbrennungskraftmaschinen (Ottomotoren) als auch bei selbstzündenden Motoren (Dieselmotoren) ist eine Benetzung der kalten Brennraumwände, der Ventile, des Kolbenbodens und des Saugrohrs mit einem Kraftstofffilm. Dieser, auch als Wandfilmproblematik bekannte, Nachteil zeigt sich beispielsweise bei einer Direkteinspritzung in der Tendenz des eingespritzten Kraftstoffes sich an dem Kolbenboden, auf weichen der Einspritzstrahl üblicherweise gerichtet ist, abzulagern. Infolge dessen werden wesentliche Anteile der angesaugten oder eingespritzten Kraftstoffmenge bei den ersten Zündungen des Motors nicht oder nicht vollständig verbrannt, da sie wegen des noch kalten Motors nicht verdampfen können. Somit wird im Allgemeinen zu viel Kraftstoff bereitgestellt, was zur Folge hat, dass das Abgas während des Startvorganges erheblich erhöhte Anteile an nicht oder unvollständig verbrannten Kohlenwasserstoffen enthält. Da auch die zur Konvertierung der unvollständig verbrannten Kohlenwasserstoffe im Abgasstrang angeordneten Katalysatorsysteme beim Motorstart in der Regel noch nicht ihre Mindestbetriebstemperatur erreicht haben, steigt eine Gesamtemission des Kraftfahrzeugs, so dass die Einhaltung gesetzlicher Schadstoffgrenzen erschwert wird.

Die Problematik wird noch dadurch verstärkt, dass bei den herkömmlichen Lösungen die Anhebung der Kraftstoffzufuhr während des Startvorganges auf Kraftstoffe mit besonders schlechten Starteigenschaften, das heißt mit niedrigem Dampfdruck bei Ottokraftstoffen und/oder niedriger Zündwlligkeit bei Dieselkraftstoffen, abgestimmt wird. Dafür wird der Startmengen-Anhebungsfaktor so weit erhöht, dass auch bei sehr schlechter Kraftstoffqualität ein erfolgreicher Start sichergestellt ist. Bekannte Lösungen sehen bisher lediglich vor, den Startmengen-Anhebungsfaktor in Abhängigkeit von der Motortemperatur zu beeinflussen, wobei dieser mit steigender Motortemperatur herabgesetzt wird. Höhe des Startmengen-Anhebungsfaktors und die Charakteristik seiner Rücknahme orientieren sich im Wesentlichen an den Kraftstoffeigenschaften und sind demnach auf geringe Kraftstoffqualitäten ausgelegt. Normalerweise sind jedoch für im Verkehr befindliche Kraftfahrzeuge bessere Kraftstoffqualitäten erhältlich.

Die Kraftstoffqualität - insbesondere ein Zünd- und Verdampfungsverhalten des Kraftstoffes - hat neben den bereits erwähnten Starteigenschaften erheblichen Einfluss auf ein bereitgestelltes Antriebsmoment, einen Kraftstoffverbrauch, eine Gesamtemission und ein allgemeines Betriebsverhalten fremdgezündeter oder selbstzündender Verbrennungskraftmaschinen von Kraftfahrzeugen. So können beispielsweise bei Kenntnis von Dampfdruck und Oktan- beziehungsweise Cetanzahl Betriebsparameter, wie Einspritz-und Zündzeitpunkte, Einspritzdruck, Abgasrückführ-Massenstrom, Ladedruck, Betriebszustand einer Tankentlüftung und Position eines Nockenwellenstellers, hinsichtlich Kraftstoffverbrauch, Emission und Betriebsverhalten, insbesondere bei nicht betriebswarmem Motor, optimiert werden.

Die Druckschriften US 4,436,073 A, US 4,770,135 A, US 4 582 036 A und US 5,507,265 A beschreiben jeweils unterschiedliche Strategien um einen zunächst hohen Startmengen-Anhebungsfaktor nachfolgend in Abhängigkeit von verschiedenen Parametern abzusenken. Aus US 4,436,073 A ist bekannt, den anfänglichen Startmengen-Anhebungsfaktor in Abhängigkeit von der Motortemperatur vorzugeben und mit fortschreitender Zeit zu senken. Ferner findet eine Korrektur des Anhebungsfaktors in Abhängigkeit von der Motordrehzahl derart statt, dass mit zunehmender Motordrehzahl die Zurücknahmegeschwindigkeit des Anhebungsfaktors zunimmt und umgekehrt. Auch US 4,770,135 A und US 4 582 036 A beschreiben den Startmengen-Anhebungsfaktor zunächst in Abhängigkeit von der Motortemperatur vorzugeben und anschließend mit zunehmender Zeit oder Drehzahl beziehungsweise mit zunehmender Motortemperatur zurückzunehmen. US 5,507,265 A beschreibt die Berechnung eines Startmengen-Anhebungsfaktors als Summe mehrerer Faktoren, von denen ein erster mit zunehmender Motortemperatur und ein zweiter mit zunehmender Zeit sinkt. Um im Falle schlechter Kraftstoffqualität im Anschluss an den Motorhochtauf ein erneutes Absinken der Motordrehzahl infolge der Zurücknahme des Anhebungsfaktors zu vermeiden, werden bei Abfall der Drehzahl unterhalb einer Drehzahlschwelle weitere Faktoren aktiviert, die in Abhängigkeit von einer Leerlaufregler-Aktivierung, einer Motorlast oder einer Drehzahländerung die Startmengen-Anhebung auch nach dem Motorhochlauf aufrechterhalten.

Aufgabe der vorliegenden Erfindung ist es, ein Verfahren zur Anpassung einer zugeführten Kraftstoffmenge während eines Startvorganges einer Verbrennungskraftmaschine zur Verfügung zu stellen, durch das eine bessere Adaption des Startmengen-Anhebungsfaktors an die tatsächlichen Verhältnisse während des Startvorganges, insbesondere an eine vorliegende Kraftstoffqualität, erfolgen kann. Damit einhergehend soll die Gesamtemission und der Kraftstoffverbrauch des Kraftfahrzeugs reduziert werden.

Diese Aufgabe wird durch ein Verfahren mit den Merkmalen des Anspruchs 1 gelöst. Erfindungsgemäß ist vorgesehen, dass
(a) nach Erreichen eines ersten Schwellenwertes für eine Motordrehzahl zu einem ersten Zeitpunkt der Startmengen-Anhebungsfaktor zunächst auf einen Anfangsstartmengen-Anhebungsfaktor gesetzt wird,
(b) ein zweiter Zeitpunkt vorgegeben oder durch Erreichen eines Schwellenwertes für eine Anzahl an Umdrehungen seit Beginn des Startvorganges bestimmt wird,
(c) der Startmengen-Anhebungsfaktor angehoben wird, wenn zum zweiten Zeitpunkt die Motordrehzahl noch unterhalb eines zweiten Schwellenwertes, der kleiner als eine Leerlaufdrehzahl ist, liegt und/oder eine Motordrehzahländerung seit Beginn der Anhebung zum ersten Zeitpunkt noch unterhalb eines Schwellenwertes liegt, und
(d) der Startmengen-Anhebungsfaktor nach erfolgreichem Motorstart zurückgenommen wird.

Durch diese Maßnahmen werden in der Regel während des Startvorganges geringere Kraftstoffmengen zugeführt. Im Resultat ist eine Wandfilmbildung des Kraftstoffes reduziert und eine Gesamtemission an unverbrannten Kohlenwasserstoffen HC und Kohlenmonoxid CO des Kraftfahrzeugs wird gesenkt.

Gemäß einer bevorzugten Ausgestaltung des Verfahrens erfolgt die Anhebung des Startmengen-Anhebungsfaktors in Abhängigkeit von einer verstrichenen Zeit seit Beginn des Startvorganges, der Anzahl der Motorumdrehungen seit Beginn des Startvorganges, der Motordrehzahl und/oder der Motordrehzahländerung. Auf diese Weise kann die zugeführte Kraftstoffmenge besonders genau den tatsächlichen Bedürfnissen während des Startvorganges angepasst werden und die Wandfilmbildung wird weitestgehend zurückgedrängt.

Weiterhin ist bevorzugt den Startmengen-Anhebungsfaktor durch Vorgabe eines maximalen Startmengen-Anhebungsfaktors zu begrenzen. Der maximale Startmengen-Anhebungsfaktor kann insbesondere in Abhängigkeit von Parametem, wie der Motortemperatur, der Anzahl an Motorumdrehungen und der verstrichenen Zeit seit Beginn des Startvorganges, der bereits zugeführten Kraftstoffmenge und/oder der Motordrehzahl, festgelegt werden. Durch die Begrenzung des Startmengen-Anhebungsfaktors wird ein Übersteuem vermieden.

In einer weiteren bevorzugten Ausgestaltung des Verfahrens wird ein dritter Zeitpunkt vorgegeben oder durch Erreichen eines Schwellenwertes für die Anzahl an Umdrehungen seit Beginn des Startvorganges bestimmt. Der Startmengen-Anhebungsfaktor wird abgesenkt, wenn die Motordrehzahl zum dritten Zeitpunkt unterhalb des zweiten Schwellenwertes für die Motordrehzahl und/oder des Schwellenwertes für die Motordrehzahländerung liegt. Auf diese Weise soll eine übergroße Wandfilmbildung bei schlechten Kraftstoffen vermieden werden.

In einer weiteren bevorzugten Ausgestaltung letztgenannter Verfahrensführung wird beim Erreichen eines vierten Zeitpunktes der Startvorgang abgebrochen, wenn die Motordrehzahl unterhalb des zweiten Schwellenwertes oder des Schwellenwertes für die Motordrehzahländerung liegt. Der vierte Zeitpunkt kann fest vorgegeben werden. Denkbar ist auch, den vierten Zeitpunkt anhand eines Schwellenwertes für die Anzahl an Umdrehungen seit Beginn des Startvorganges zu bestimmen. Ein Anlasserbetrieb wird vorzugsweise zeitgleich oder zeitversetzt mit Abbruch des Startvorganges durch ein Motorsteuergerät unterbunden.

Für den Fall eines Abbruchs des Startvorganges wird bevorzugt in einem nachfolgenden und gegebenenfalls in weiteren Wiederholstarts sofort mit dem maximalen Startmengen-Anhebungsfaktor die Kraftstoffzufuhr begonnen. Vorzugsweise wird für die Wiederholstarts ein fünfter Zeitpunkt vorgegeben oder durch Erreichen eines Schwellenwertes für die Anzahl an Umdrehungen seit Beginn des Startvorganges bestimmt. Der Startmengen-Anhebungsfaktor wird beginnend von dem maximalen Startmengen-Anhebungsfaktor abgesenkt, wenn die Motordrehzahl zum fünften Zeitpunkt unterhalb des zweiten Schwellenwertes und/oder des Schwellenwertes für die Motordrehzahländerung liegt. Auch ein laufender Wederholstart kann abgebrochen werden und durch einen oder mehrere nachfolgende Wiederholstarts ersetzt werden. Ein erfolgreicher Start kann durch Erreichen einer Leerlaufdrehzahl oder anhand einer Drehzahländerung in einem vorgegebenen Zeitintervall bestimmt werden.

Das erfindungsgemäße Verfahren findet vorzugsweise dann Anwendung, wenn die Verbrennungskraftmaschine fremdgezündet ist (Ottomotor), insbesondere ein direkteinspritzender Ottomotor ist. Bevorzugt ist ferner die Verwendung des Verfahrens auch bei selbstzündenden Verbrennungskraftmaschinen (Dieselmotoren).

Weitere vorteilhafte Ausgestaltungen sind Gegenstand der übrigen Unteransprüche.

Die Erfindung wird nachfolgend in Ausführungsbeispielen anhand der zugehörigen Zeichnungen näher erläutert. Es zeigen:
- Figur 1: einen Verlauf eines Startmengen-Anhebungsfaktors, einer Motordrehzahl und eines Lambdawertes vor einem Vorkatalysator während eines Startvorganges beim Stand der Technik;
- Figur 2: einen Verlauf des Startmengen-Anhebungsfaktors, der Motordrehzahl und des Lambdawertes vor dem Vorkatalysator während eines Startvorganges nach dem ersten erfindungsgemäßen Verfahren;
- Figur 3: wie Figur 2, jedoch mit einem schlechten Kraftstoff und linearer Anhebung des Startmengen-Anhebungsfaktors;
- Figur 4: wie Figur 3, jedoch mit stufenweiser Anhebung des Startmengen-Anhebungsfaktors;
- Figur 5: einen Verlauf des Startmengen-Anhebungsfaktors und der Motordrehzahl mit einem extrem schlechten Kraftstoff und
- Figur 6: einen Verlauf des Startmengen-Anhebungsfaktors und der Motordrehzahl bei einem Wederholstart mit einem extrem schlechten Kraftstoff.

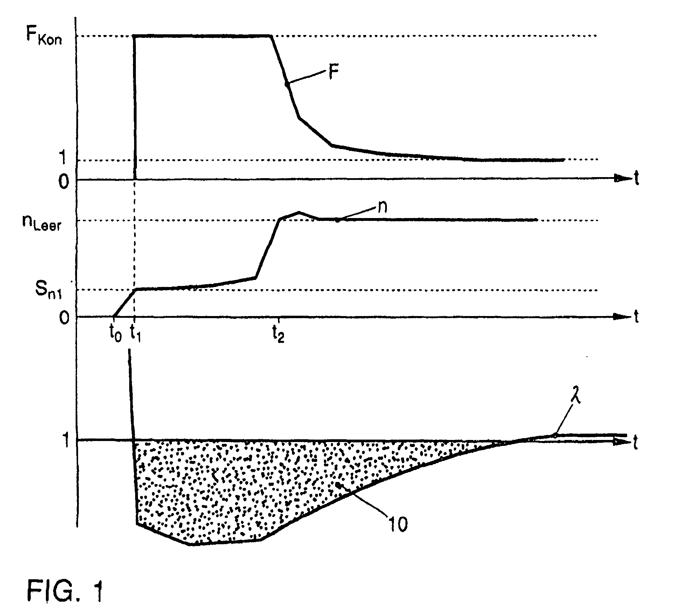

Figur 1 zeigt den zeitlichen Verlauf eines Startmengen-Anhebungsfaktors F, einer Motordrehzahl n und eines Lambdawertes λ vor einem Vorkatalysator (das heißt im Rohabgas) während eines Startvorgariges einer Verbrennungskraftmaschine bei herkömmlicher Verfahrensführung. Die dargestellten Verläufe sind selbstverständlich nur schematisch zu sehen und können in konkreter Ausgestaltung für eine bestimmte Verbrennungskraftmaschine leicht abgeänderte Verläufe einnehmen. Die notwendigen Mittel zur Beeinflussung einer der Verbrennungskraftmaschine zugeführten Kraftstoffmenge, insbesondere zur Durchführung der Anhebung der Kraftstoffmenge sind bekannt. Insbesondere sind steuerbare Einspritzsysteme für selbstzündende oder fremdgezündete Motoren bekannt, mit denen die Kraftstoffzufuhr zumindest quantitativ steuerbar ist. Eine Koordination einzelner, am Startvorgang beteiligter Aggregate kann in bekannter Weise über ein Motorsteuergerät erfolgen.

Mit Beginn des Startvorganges (Zeitpunkt t₀) wird die Verbrennungskraftmaschine mittels eines Anlassers zunächst mit einem Drehmoment beaufschlagt, bis ein erster Schwellenwert Sₙ₁ für die Drehzahl n erreicht ist (Zeitpunkt t₁). Mit Erreichen des Schwellenwertes Sₙ₁ zum Zeitpunkt t₁ wird die Kraftstoffzufuhr durch Einspritzen oder Ansaugen freigegeben. Die Menge des zugeführten Kraftstoffs wird während des Startvorganges um einen Startmengen-Anhebungsfaktor Fₖₒₙ erhöht und dabei für ein vorgebbares Intervall konstant gehalten, beispielsweise bis die Motordrehzahl n eine gewünschte Leerlaufdrehzahl n_{Leer} erreicht hat (Zeitpunkt t₂). Nach Erreichen des Zeitpunktes t₂ wird der konventionelle Startmengen-Anhebungsfaktor Fₖₒₙ allmählich auf den Wert 1 zurückgeführt und damit die Anhebung der Kraftstoffzufuhr gegenüber einem "Normalbetrieb" beendet. Eine Bemessung des konventionellen Startmengen Anhebungsfaktors Fₖₒₙ erfolgt derart, dass ein erfolgreicher Motorstart auch noch bei sehr schlechter Kraftstoffqualität, insbesondere extrem schlecht verdampfbaren und/oder entzündbaren Kraftstoffen, zu erwarten ist. Dies führt aber auch dazu, dass eine starke Wandfilmbildung in Kauf genommen werden muss. Bei den ersten Zündungen können wesentliche Anteile des Kraftstoffes nicht oder nicht vollständig verbrennen und erhöhen damit die Emission von unvollständig verbrannten Kohlenwasserstoffen erheblich. Die hohe Einspritzmenge führt zu einem sehr fetten Abgas, wobei die unterhalb einer λ=1-Linie liegenden Flächenintegrale einen Anhalt für die HC-Emissionen während des Startvorganges liefern (Fläche 10). Je größer die Fläche 10 ist, um so höher liegt die HC-Emission. Hier macht sich besonders nachteilig bemerkbar, dass zu diesem frühen Zeitpunkt nachgeschaltete Katalysatorsysteme noch nicht auf ihre Betriebstemperatur aufgeheizt sind und eine Konvertierung von HC nicht oder nur sehr begrenzt erfolgt.

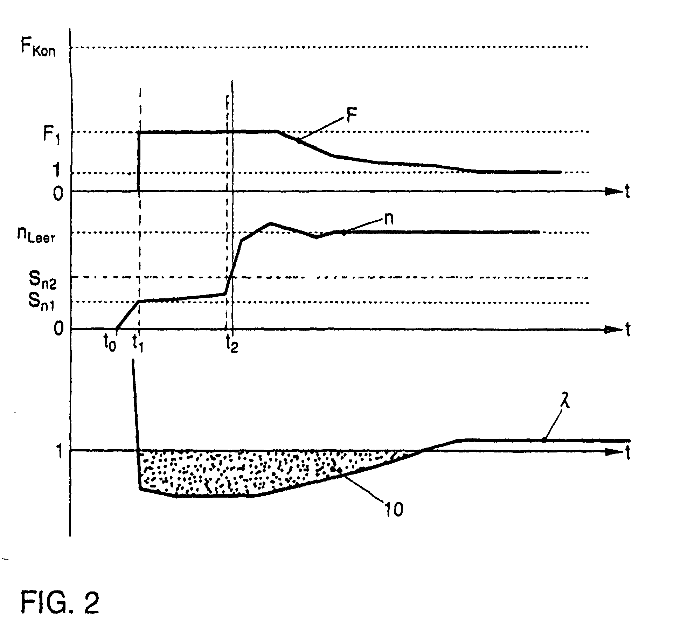

In der Figur 2 sind die Verläufe des Startmengen-Anhebungsfaktors' F, der Motordrehzahl n und des Lambdawertes λ vor dem Vorkatalysator nach erfindungsgemäßer Verfahrensführung gemäß einer ersten Ausführung bei Verwendung handelsüblichen Kraftstoffes dargestellt. Nach dem Beginn des Startvorganges (Zeitpunkt t₀) wird der Motor zunächst durch den Anlasser beschleunigt, bis der erste Schwellenwert' Sₙ₁ erreicht ist (Zeitpunkt t₁). Unmittelbar mit Erreichen des Schwellenwertes Sₙ₁ oder - in Abweichung zur Darstellung - mit einer geringen vorgebbaren Verzögerung wird die Kraftstoffzufuhr freigegeben und zwar derart, dass zunächst ein gegenüber dem konventionellen Startmengen-Anhebungsfaktor Fₖₒₙ (zu Vergleichzwecken ebenfalls eingetragen) deutlich niedrigerer Anfangsstartmengen-Anhebungsfaktor F₁ vorgegeben wird. Mit Startbeginn wird gleichzeitig ein zweiter Zeitpunkt t₂ vorgegeben, der entweder durch ein festgelegtes Zeitintervall nach Beginn des Startvorganges (Zeitpunkt t₀) oder durch Erreichen eines Schwellenwertes für eine Anzahl an Umdrehungen seit Beginn des Startvorganges bestimmt wird.

Im vorliegenden Fall ist die Kraftstoffqualität so gut, dass ein erfolgreicher Motorstart bereits vor Erreichen des zweiten Zeitpunktes t₂ erkannt wurde. Der erfolgreiche Start kann in an sich bekannter Weise mittels einer Hochlauferkennung erkannt werden, etwa durch Erreichen der gewünschten Leerlaufdrehzahl n_{Leer} oder wie hier anhand einer Drehzahländerung in einem vorgegebenen Zeitintervall, das heißt anhand der Steigung der Kurve n. Übersteigt die Drehzahländerung einen vorgebbaren Schwellenwert für die Motordrehzahländerung, so wird von einem erfolgreichen Start ausgegangen. Nach Start des Motors wird der Startmengen-Anhebungsfaktor F zunächst noch kurze Zeit gehalten und dann allmählich auf den Wert 1 zurückgeführt. Es wird deutlich, dass im Vergleich zur konventionellen Startvorgangssteuerung deutlich niedrigere Kraftstoffmengen eingespritzt werden und demzufolge auch die Emission von unkonvertierten Kohlenwasserstoffen verringert wird (Fläche 10).

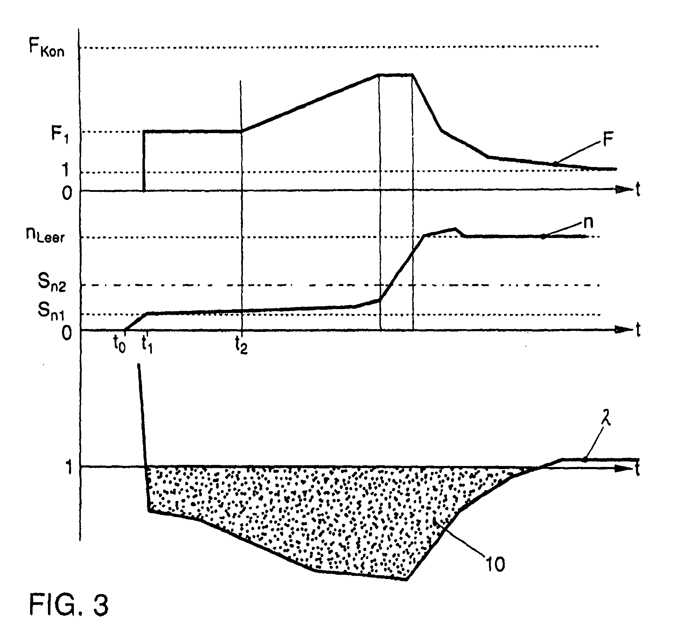

Die Figur 3 zeigt einen Startvorgang nach dem erfindungsgemäßen Verfahren analog Figur 2 jedoch mit einem Kraftstoff minderer Qualität. Zum Zeitpunkt t₂, der - wie oben bereits geschildert - festgelegt wird, ist der Startvorgang noch nicht erfolgreich abgeschossen worden. Der Startmengen-Anhebungsfaktor F wird dann angehoben, wenn die Motordrehzahl n zum Zeitpunkt t₂ unterhalb eines zweiten Schwellenwertes Sₙ₂ und/oder eine Motordrehzahländerung seit Beginn der Anhebung (Zeitpunkt t₁) unterhalb eines Schwellenwertes liegt. Eine Anhebung des Startmengen-Anhebungsfaktors F erfolgt hier mit weitestgehend linearer Dynamik. Die Dynamik der Anhebung des Startmengen-Anhebungsfaktors F kann in Abhängigkeit von einer verstrichenen Zeit seit Beginn des Startvorganges, der Motordrehzahl n und/oder der Motordrehzahländerung vorgegeben werden, so dass auch andere als lineare Verläufe denkbar sind.

Wenn die Hochlauferkennung einen erfolgreichen Start signalisiert, wird der Startmengen-Anhebungsfaktor F wieder allmählich auf den Wert 1 zurückgeführt. Ebenfalls kann - entsprechend der Darstellung - der zum Startzeitpunkt vorliegende Startmengen-Anhebungsfaktor F noch für ein vorgebbares Zeitintervall gehalten werden. Im Allgemeinen ist' die Gesamtemission an Kohlenwasserstoffen bei einem Startvorgang mit der vorliegenden Kraftstoffqualität noch deutlich niedriger als beim Stand der Technik. Durch die gegebenenfalls längere Startdauer können zwar die Rohemissionen an Kohlenwasserstoffen durch die Verbrennungskraftmaschine ansteigen, jedoch werden die Spitzenemissionen zeitlich nach hinten verschoben. Nachgeordnete Katalysatorsysteme können dann bereits ihre Mindestbetriebstemperatur zur Konvertierung der Schadstoffe erreicht haben, so dass eine Gesamtemission des Kraftfahrzeuges sinkt.

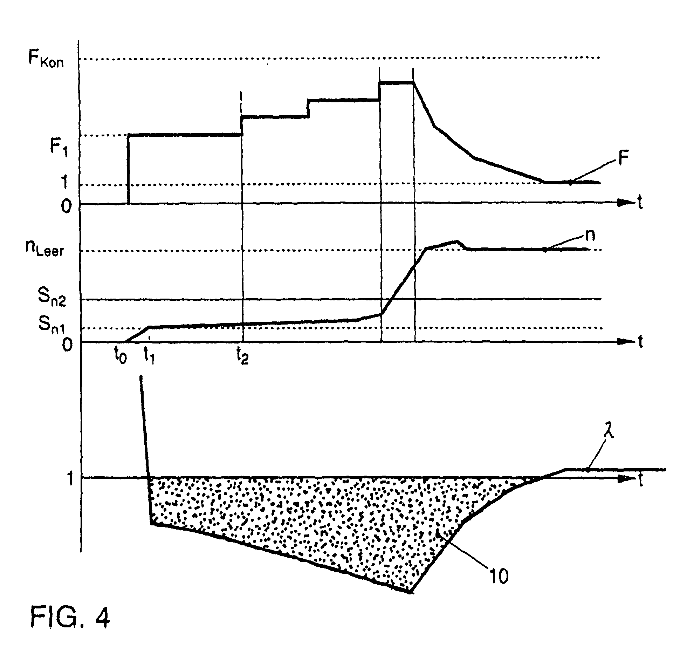

Die Figur 4 zeigt eine alternative Anhebung des Startmengen-Anhebungsfaktors F bei ansonsten gleichen Randbedingungen, wie beim Startvorgang nach Figur 3. Anstelle eines linearen Anstiegs erfolgt hier eine stufenweise Erhöhung des Startmengen-Anhebungsfaktors F, bis die Motorhochlauferkennung einen erfolgreichen Start detektiert.

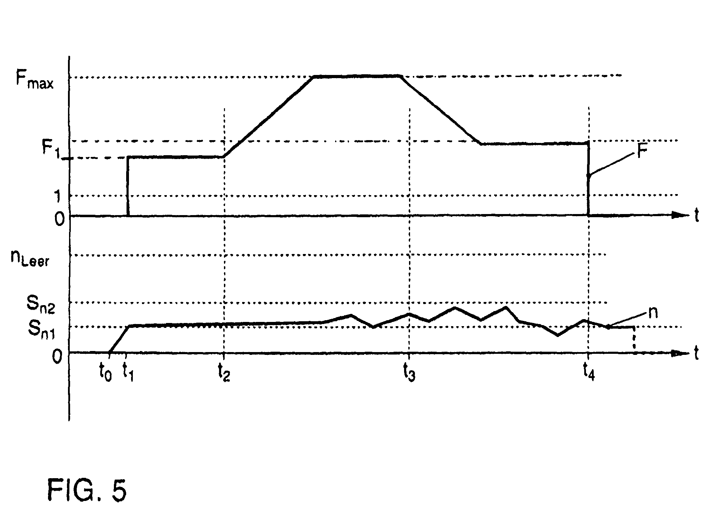

In der Figur 5 ist ein Startvorgang mit einem extrem schlechten und nicht normgerechten Kraftstoff am Verlauf der Motordrehzahl n und des Startmengen-Anhebungsfaktors F dargestellt. Wie bereits obig erläutert, wird der Startmengen-Faktor F angehoben, wenn zum Zeitpunkt t₂ nicht der zweite Schwellenwert Sₙ₂ und/oder der Schwellenwert für die Motordrehzahländerung überschritten ist. Die Anhebung erfolgt hier zunächst linear, wird aber insgesamt durch Vorgabe eines maximalen Startmengen-Anhebungsfaktor Fₘₐₓ begrenzt. Der maximale Startmengen-Anhebungsfaktor Fₘₐₓ soll eine übermäßige Wandfilmbildung verhindern und kann in Abhängigkeit von einer Motortemperatur, einer Anzahl an Motorumdrehungen seit Beginn des Startvorganges, einem Zeitintervall seit Beginn des Startvorganges, einer bereits zugeführten Kraftstoffmenge und/oder der Motordrehzahl n bestimmt werden.

Gleichzeitig mit Beginn der Anhebung wird ein dritter Zeitpunkt t₃ vorgegeben oder durch Erreichen eines Schwellenwertes für die Anzahl an Umdrehungen seit Beginn des Startvorganges bestimmt. Der Startmengen-Anhebungsfaktor F wird abgesenkt, wenn die Motordrehzahl n zum Zeitpunkt t₃ noch immer unterhalb des zweiten Schwellenwertes Sₙ₂ und/oder des Schwellenwertes für die Motordrehzahländerung liegt, um eine übergroße Wandfilmbenetzung zu verhindern. Die Absenkung erfolgt beispielweise linear bis zu einem Niveau, das vom Anfangsstartmengen-Anhebungsfaktor F₁ abweichen kann, vorzugsweise den Anfangsstartmengen-Anhebungsfaktor F₁ übersteigt.

Wenn auch bis zum Zeitpunkt t₃ noch kein erfolgreicher Startvorgang durchgeführt werden konnte, wird ein vierter Zeitpunkt t₄ vorgegeben oder durch Erreichen eines Schwellenwertes für die Anzahl an Umdrehungen seit Beginn des Startvorganges bestimmt. Der Startvorgang wird abgebrochen, wenn die Motordrehzahl n zum Zeitpunkt t₄ unterhalb des zweiten Schwellenwertes Sₙ₂ oder des Schwellenwertes für die Motordrehzahländerung liegt. Zeitgleich oder zeitversetzt mit Abbruch des Startvorganges wird ein Anlasserbetrieb vom Motorsteuergerät unterbunden, so dass ein erneuter Startversuch erst mit einer Zeitverzögerung durch emeutes Einspuren des Anlassers möglich ist.

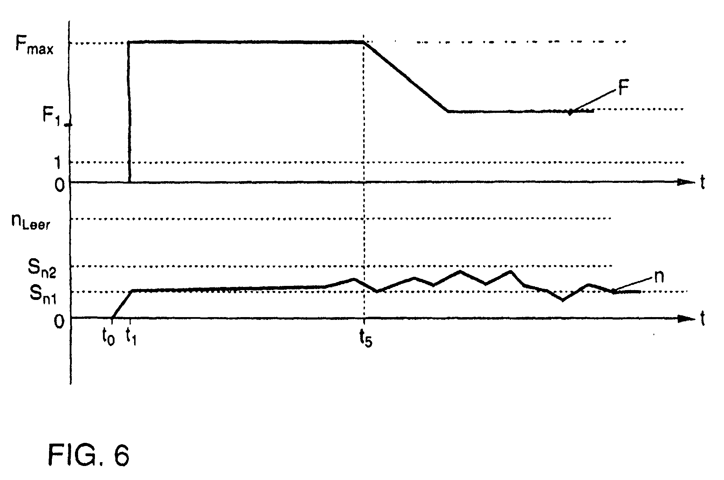

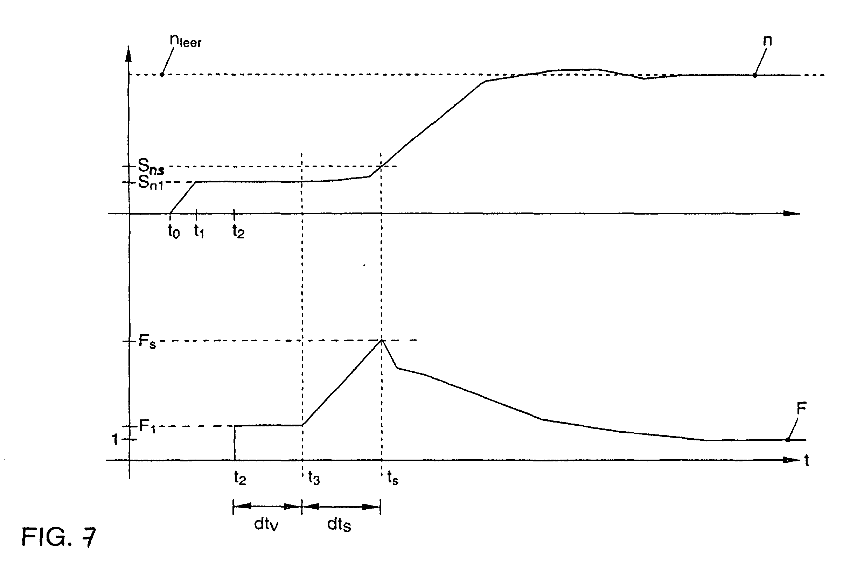

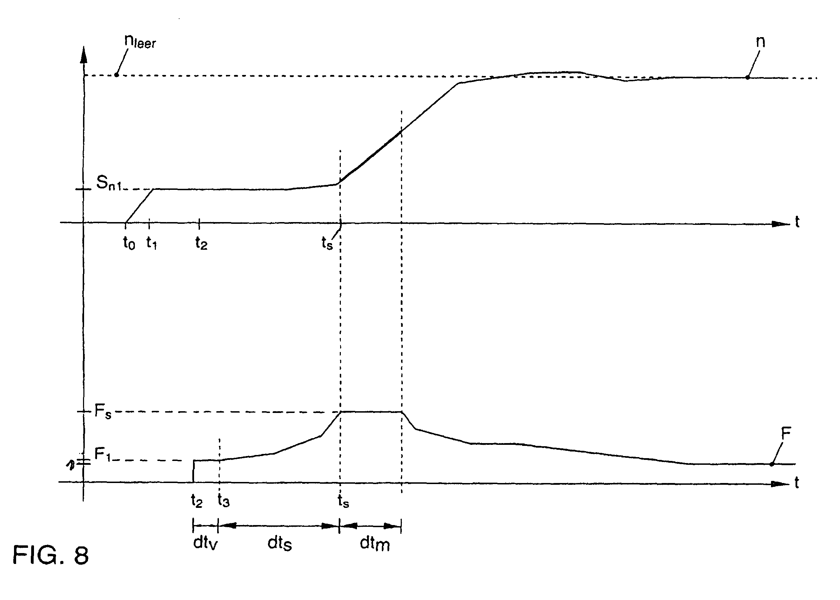

Wird, wie im vorliegenden Fall, der Startvorgang abgebrochen, so kann zumindest ein nachfolgender Wiederholstart entsprechend der in Figur 6 aufgezeigten Verfahrensführung eingeleitet werden. Beim Wiederholstart wird sofort nach Erreichen des ersten Schwellenwertes Sₙ₁, mit Vorgabe des maximalen Startmengen-Anhebungsfaktors Fₘₐₓ begonnen (Zeitpunkt t₁), um eine Batterie des Kraftfahrzeugs zu schonen. Einhergehend wird ein fünfter Zeitpunkt t₅ vorgegeben oder durch Erreichen eines Schwellenwertes für die Anzahl an Umdrehungen seit Beginn des Startvorganges bestimmt. Wenn die Motordrehzahl n zum Zeitpunkt t₅ noch unterhalb des zweiten Schwellenwertes Sₙ₂ und/oder des Schwellenwertes für die Motordrehzahländerung liegt, so wird der Startmengen-Anhebungsfaktor F abgesenkt. Selbstverständlich kann auch ein laufender Wiederholstart abgebrochen werden und durch einen oder mehrere nachfolgende Wiederholstarts wiederholt werden.

### BEZUGSZEICHENLISTE

- 10: Fläche zur Abschätzung einer HC-Emission während des Startvorganges
- F: Startmengen-Anhebungsfaktor
- F₁: Anfangsstartmengen-Anhebungsfaktor
- Fₖₒₙ: konventioneller Startmengen-Anhebungsfaktor
- Fₘₐₓ: maximaler Startmengen-Anhebungsfaktor
- n: Drehzahl
- n_{Leer}: Leerlaufdrehzahl
- Sₙ₁: erster Schwellenwert für die Motordrehzahl n
- Sₙ₂: zweiter Schwellenwert für die Motordrehzahl n
- Sₙₛ: weiterer Schwellenwert für die Motordrehzahl n
- t₀: Beginn des Startvorganges
- t₁: Zeitpunkte

## Patentansprüche

1. Verfahren zur Steuerung einer zugeführten Kraftstoffmenge während eines Startvorganges einer Verbrennungskraftmaschine, bei dem die zugeführte Kraftstoffmenge um einen Startmengen-Anhebungsfaktor (F) erhöht wird, wobei
(a) nach Erreichen eines ersten Schwellenwertes (Sₙ₁) für eine Motordrehzahl (n) zu einem ersten Zeitpunkt (t₁) der Startmengen-Anhebungsfaktor (F) zunächst auf einen Anfangsstartmengen-Anhebungsfaktor (F₁) gesetzt wird,
(b) ein zweiter Zeitpunkt (t₂) vorgegeben oder durch Erreichen eines Schwellenwertes für eine Anzahl an Umdrehungen seit Beginn des Startvorganges bestimmt wird,
(c) der Startmengen-Anhebungsfaktor (F) angehoben wird, wenn zum zweiten Zeitpunkt (t₂) die Motordrehzahl (n) noch unterhalb eines zweiten Schwellenwertes (Sₙ₂), der kleiner als eine Leerlaufdrehzahl (n_{Leer}) ist, liegt und/oder eine Motordrehzahländerung seit Beginn der Anhebung zum ersten Zeitpunkt (t₁) noch unterhalb eines Schwellenwertes liegt, und
(d) der Startmengen-Anhebungsfaktor (F) nach erfolgreichem Motorstart zurückgenommen wird.

2. Verfahren nach Anspruch 1, **dadurch gekennzeichnet, dass** eine Dynamik der Anhebung des Startmengen-Anhebungsfaktors (F) in Abhängigkeit von einer verstrichenen Zeit seit Beginn des Startvorganges, der Anzahl der Motorumdrehungen seit Beginn des Startvorganges, der Motordrehzahl (n) und/oder der Motordrehzahländerung vorgegeben wird.

3. Verfahren nach den Ansprüchen 1 oder 2, **dadurch gekennzeichnet, dass** der Startmengen-Anhebungsfaktor (F) durch Vorgabe eines maximalen Startmengen-Anhebungsfaktors (Fₘₐₓ) begrenzt wird.

4. Verfahren nach Anspruch 3, **dadurch gekennzeichnet, dass** der maximale Startmengen-Anhebungsfaktor (Fₘₐₓ) in Abhängigkeit von einer Motortemperatur, einer Anzahl an Motorumdrehungen seit Beginn des Startvorganges, einem Zeitintervall seit Beginn des Startvorganges, einer bereits zugeführten Kraftstoffmenge und/oder der Motordrehzahl (n) bestimmt wird.

5. Verfahren nach einem der Ansprüche 1 bis 4, **dadurch gekennzeichnet, dass**
(a) ein dritter Zeitpunkt (t₃) vorgegeben oder durch Erreichen eines Schwellenwertes für die Anzahl an Umdrehungen seit Beginn des Startvorganges bestimmt wird und
(b) der Startmengen-Anhebungsfaktor (F) abgesenkt wird, wenn die Motordrehzahl (n) zum dritten Zeitpunkt (t₃) unterhalb des zweiten Schwellenwertes (Sₙ₂) und/oder des Schwellenwertes für die Motordrehzahländerung liegt.

6. Verfahren nach Anspruch 5, **dadurch gekennzeichnet, dass**
(a) ein vierter Zeitpunkt (t₄) vorgegeben oder durch Erreichen eines Schwellenwertes für die Anzahl an Umdrehungen seit Beginn des Startvorganges bestimmt wird und
(b) der Startvorgang abgebrochen wird, wenn die Motordrehzahl (n) zum vierten Zeitpunkt (t₄) unterhalb des zweiten Schwellenwertes (Sₙ₂) oder des Schwellenwertes für die Motordrehzahländerung liegt.

7. Verfahren nach Anspruch 6, **dadurch gekennzeichnet, dass** zeitgleich oder zeitversetzt mit Abbruch des Startvorganges ein Anlasserbetrieb unterbunden wird.

8. Verfahren nach den Ansprüchen 6 oder 7, **dadurch gekennzeichnet, dass** nach Abbruch des Startvorganges bei zumindest einem nachfolgenden Wiederholstart sofort mit dem maximalen Startmengen-Anhebungsfaktor (Fₘₐₓ) begonnen wird.

9. Verfahren nach Anspruch 8, **dadurch gekennzeichnet, dass**
(a) bei einem Wiederhotstart ein fünfter Zeitpunkt (t₅) vorgegeben oder durch Erreichen eines Schwellenwertes für die Anzahl an Umdrehungen seit Beginn des Startvorganges bestimmt wird und
(b) der Startmengen-Anhebungsfaktor (F) ausgehend von dem maximalen Startmengen-Anhebungsfaktor (Fₘₐₓ) abgesenkt wird, wenn die Motordrehzahl (n) zum fünften Zeitpunkt (t₅) unterhalb des zweiten Schwellenwertes (Sₙ₂) und/oder des Schwellenwertes für die Motordrehzahländerung liegt.

10. Verfahren nach den Ansprüchen 8 oder 9, **dadurch gekennzeichnet, dass** ein laufender Wiederholstart abgebrochen werden kann und durch einen oder mehrere nachfolgende Wiederholstarts wiederholbar ist.

11. Verfahren nach einem der Ansprüche 1 bis 10, **dadurch gekennzeichnet, dass** ein erfolgreicher Start durch Erreichen einer Leerlaufdrehzahl (nₗₑₑᵣ) oder anhand einer Drehzahländenrng in einem vorgegebenen Zeitintervall bestimmt wird.

12. Verfahren nach einem der Ansprüche 1 bis 11, **dadurch gekennzeichnet, dass** die Verbrennugs Kraftmashine ein Ottomotor ist, insbesondere ein direkteinspritzender Ottomotor.

13. Verfahren nach einem der Ansprüche 1 bis 11, **dadurch gekennzeichnet, dass** die Verbrennugs Kraftmashine ein Dieselmotor ist.

## Claims

1. Method for controlling a supplied fuel quantity during a starting process of an internal combustion engine in which the supplied fuel quantity is increased by a starting quantity increase factor (F), wherein
(a) after a first threshold value (Sₙ₁) is reached for an engine speed (n) at a first time (t₁), the starting quantity increase factor (F) is firstly increased to an initial starting quantity increase factor (F₁),
(b) a second time (t₂) is predefined or is determined by reaching a threshold value for a number of revolutions since the start of the starting process,
(c) the starting quantity increase factor (F) is increased if at the second time (t₂) the engine speed (n) is still below a second threshold value (Sₙ₂) which is lower than an idling speed (n_{Idle}) and/or a change in engine speed since the start of the increase at the first time (t₁) is still below a threshold value, and
(d) the starting quantity increase factor (F) is withdrawn after a successful engine start.

2. Method according to Claim 1, **characterized in that** a dynamic of the increase in the starting quantity increase factor (F) is predefined as a function of a time which has passed since the start of the starting process, the number of revolutions of the engine since the start of the starting process, the engine speed (n) and/or the change in the engine speed.

3. Method according to Claim 1 or 2, **characterized in that** the starting quantity increase factor (F) is limited by predefining a maximum starting quantity increase factor (Fₘₐₓ).

4. Method according to Claim 3, **characterized in that** the maximum starting quantity increase factor (Fₘₐₓ) is determined as a function of an engine temperature, a number of revolutions of the engine since the start of the starting process, a time interval since the start of the starting process, a fuel quantity which has already been supplied and/or the engine speed (n).

5. Method according to one of Claims 1 to 4, **characterized in that**
(a) a third time (t₃) is predefined or is determined by reaching a threshold value for the number of revolutions since the start of the starting process, and
(b) the starting quantity increase factor (F) is reduced if the engine speed (n) at the third time (t₃) lies below the second threshold value (Sₙ₂) and/or the threshold value for the change in the engine speed.

6. Method according to Claim 5, **characterized in that**
(a) a fourth time (t₄) is predefined or is determined by reaching a threshold value for the number of revolutions since the start of the starting process, and
(b) the starting process is aborted if the engine speed (n) at the fourth time (t₄) lies below the second threshold value (Sₙ₂) or the threshold value for the change in the engine speed.

7. Method according to Claim 6, **characterized in that** a starter operating mode is prohibited simultaneously or at a staggered time with respect to the aborting of the starting process.

8. Method according to Claim 6 or 7, **characterized in that** after the aborting of the starting process at least one subsequent repeat start is started immediately with the maximum starting quantity increase factor (Fₘₐₓ).

9. Method according to Claim 8, **characterized in that**
(a) when there is a repeat start a fifth time (t₅) is predefined or is determined by reaching a threshold value for the number of revolutions since the start of the starting process, and
(b) the starting quantity increase factor (F) is reduced starting from the maximum starting quantity increase factor (Fₘₐₓ) if the engine speed (n) at the fifth time (t₅) lies below the second threshold value (Sₙ₂) and/or the threshold value for the change in the engine speed.

10. Method according to Claim 8 or 9, **characterized in that** an ongoing repeat start can be aborted and can be repeated by one or more subsequent repeat starts.

11. Method according to one of Claims 1 to 10, **characterized in that** a successful start is determined by reaching an idling speed (n_{Idle}) or by reference to a change in rotational speed in a predefined time interval.

12. Method according to one of Claims 1 to 11, **characterized in that** the internal combustion engine is a spark ignition engine, in particular a spark ignition engine with direct injection.

13. Method according to one of Claims 1 to 11, **characterized in that** the internal combustion engine is a diesel engine.

## Revendications

1. Procédé de commande d'une quantité de carburant injectée pendant une opération de démarrage d'un moteur à combustion interne, dans lequel la quantité de carburant injectée est augmentée d'un facteur d'accroissement de quantité de démarrage (F),
(a) le facteur d'accroissement de quantité de démarrage (F) étant d'abord mis à un facteur d'accroissement de quantité de démarrage initial (F₁) une fois qu'une première valeur de seuil (Sₙ₁) pour un régime du moteur (n) a été atteinte à un premier instant (t₁),
(b) un deuxième instant (t₂) étant prédéfini, ou étant défini par l'atteinte d'une valeur de seuil pour un certain nombre de rotations dès le début de l'opération de démarrage,
(c) le facteur d'accroissement de quantité de démarrage (F) étant augmenté lorsqu'à l'instant (t₂), le régime du moteur (n) est encore en dessous d'une deuxième valeur de seuil (Sₙ₂) qui est inférieure à un régime de marche à vide (n_{Leer}), et/ou lorsqu'une variation du régime du moteur dès le début de l'accroissement au premier instant (t₁) se trouve encore en dessous d'une valeur de seuil, et
(d) le facteur d'accroissement de quantité de démarrage (F) étant réduit une fois le démarrage du moteur effectué.

2. Procédé selon la revendication 1, **caractérisé en ce qu'**une dynamique d'accroissement du facteur d'accroissement de quantité de démarrage (F) est prédéfinie en fonction d'un temps écoulé depuis le début de l'opération de démarrage, du nombre de rotations du moteur depuis le début de l'opération de démarrage, du régime du moteur (n) et/ou de la variation du régime du moteur.

3. Procédé selon les revendications 1 ou 2, **caractérisé en ce que** le facteur d'accroissement de quantité de démarrage (F) est limité par la fourniture préalable d'un facteur d'accroissement de quantité de démarrage maximal (Fₘₐₓ).

4. Procédé selon la revendication 3, **caractérisé en ce que** le facteur d'accroissement de quantité de démarrage maximal (Fₘₐₓ) est déterminé en fonction d'une température du moteur, d'un certain nombre de rotations du moteur dès le début de l'opération de démarrage, d'un intervalle de temps dès le début de l'opération de démarrage, d'une quantité de carburant déjà injectée et/ou du régime du moteur (n).

5. Procédé selon l'une quelconque des revendications 1 à 4, **caractérisé en ce que**
(a) un troisième instant (t₃) est prédéfini ou est déterminé par l'atteinte d'une valeur de seuil pour le nombre de rotation dès le début de l'opération de démarrage et
(b) le facteur d'accroissement de quantité de démarrage (F) est abaissé lorsque le régime du moteur (n) se trouve au troisième instant (t₃) en dessous de la deuxième valeur de seuil (Sₙ₂) et/ou de la valeur de seuil pour la variation du régime du moteur.

6. Procédé selon la revendication 5, **caractérisé en ce que**
(a) un quatrième instant (t₄) est prédéfini ou est déterminé par l'atteinte d'une valeur de seuil pour le nombre de rotations dès le début de l'opération de démarrage et
(b) l'opération de démarrage est interrompue si le régime du moteur (n) au quatrième instant (t₄) se trouve en dessous de la deuxième valeur de seuil (Sₙ₂) ou de la valeur de seuil pour la variation du régime du moteur.

7. Procédé selon la revendication 6, **caractérisé en ce que** en même temps que l'arrêt de l'opération de démarrage ou avec un certain retard par rapport à elle, un fonctionnement du démarreur est supprimé.

8. Procédé selon les revendications 6 ou 7, **caractérisé en ce qu'**après l'arrêt de l'opération de démarrage, si au moins un nouveau démarrage successif est commencé, on commence immédiatement avec le facteur d'accroissement de quantité de démarrage maximal (Fₘₐₓ).

9. Procédé selon la revendication 8, **caractérisé en ce que**
(a) dans le cas d'un redémarrage, un cinquième instant (t₅) est prédéfini ou est déterminé à l'atteinte d'une valeur de seuil pour le nombre de rotations dès le début de l'opération de démarrage et
(b) le facteur d'accroissement de quantité de démarrage (F) est abaissé depuis le facteur d'accroissement de quantité de démarrage maximal (Fₘₐₓ), si le régime du moteur (n) au cinquième instant (t₅) se trouve en dessous de la deuxième valeur de seuil (Sₙ₂) et/ou de la valeur de seuil pour la variation du régime du moteur.

10. Procédé selon les revendications 8 ou 9, **caractérisé en ce qu'**un redémarrage courant peut être interrompu et peut être répété par un ou plusieurs redémarrages successifs.

11. Procédé selon l'une quelconque des revendications 1 à 10, **caractérisé en ce qu'**un démarrage réussi est déterminé par l'atteinte d'un régime de marche à vide (n_{Leer}) ou à l'aide d'une variation de régime dans un intervalle de temps prédéfini.

12. Procédé selon l'une quelconque des revendications 1 à 11, **caractérisé en ce que** le moteur à combustion interne est un moteur à allumage par étincelle, notamment un moteur à allumage par étincelle à injection directe.

13. Procédé selon l'une quelconque des revendications 1 à 11, **caractérisé en ce que** le moteur à combustion interne est un moteur diesel.
